(19) **Europäisches Patentamt / European Patent Office / Office européen des brevets**

(11) **EP 1 911 027 B1**

(12) **EUROPEAN PATENT SPECIFICATION**

| | |
|---|---|
| (45) Date of publication and mention of the grant of the patent: **31.03.2010 Bulletin 2010/13** | (51) Int Cl.: **G11B 27/00** (2006.01) **G11B 27/10** (2006.01) **G11B 27/034** (2006.01) |
| (21) Application number: **06744147.7** | (86) International application number: **PCT/GB2006/002094** |
| (22) Date of filing: **08.06.2006** | (87) International publication number: **WO 2006/134321 (21.12.2006 Gazette 2006/51)** |

(54) **MEDIA PLAYER WITH POPULARITY RANKING GENERATED BY BABIES**

MEDIA-PLAYER MIT VON BABIES ERZEUGTER POPULARITÄTSEINSTUFUNG

LECTEUR MEDIA AVEC CLASSEMENT DE POPULARITE EFFECTUE PAR LES BEBES

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.06.2005 GB 0512110**

(43) Date of publication of application:
**16.04.2008 Bulletin 2008/16**

(73) Proprietor: **The University of Bristol Clifton, Bristol BS8 1TH (GB)**

(72) Inventors:
• **CLARK, Angus**
  **Bristol BS6 5AQ (GB)**
• **MULLER, Hendrik, Lambertus**
  **Bristol BS7 8NU (GB)**
• **TROSCIANKO, Tomasz, Stanislaw**
  **Bristol BS2 8EP (GB)**

(74) Representative: **Ribeiro, James Michael et al**
  **Withers & Rogers LLP**
  **Goldings House**
  **2 Hays Lane**
  **London**
  **SE1 2HW (GB)**

(56) References cited:
**EP-A- 0 872 844**       **WO-A-00/65593**
**US-A1- 2002 057 609**   **US-A1- 2004 015 247**
**US-A1- 2004 123 725**   **US-A1- 2005 102 186**

**Description**

The present invention provides in its various aspects a method and apparatus for assigning a popularity rating to a media recording; selecting and playing a media recording; and controlling a media player. The invention is principally, although not exclusively, used in a system for playing media recordings in response to control instructions received from a baby.

US Patent 6,160,986 describes an interactive toy, in the general form of a doll, which includes a number of input sensors and a variety of output actuators. A two-unit design is described in which the doll communicates with a computerised base-unit over RF. The base-unit is responsible for collecting and storing sensor inputs, and delivering content to the doll. The base-unit can implement a number of predetermined content branches based on the current and past values of the sensor inputs. The patent goes on to suggest an authoring system whereby users can design their own interactive story.

The device presented in US Patent 4,819,616 generates a soothing random noise, similar to white noise. A microphone is used to detect when the baby starts crying. Initially a burst of noise is used to attract the attention of the baby. Shortly afterwards, the intensity of the noise reduces and continues to play until a predefined period of time. It is claimed that the noise generated by the system helps to induce sleep.

US Patent 5,774,861 describes a sound activated cot mounted device. When crying is detected, the device illuminates a picture of the baby's mother and plays an audio message. The device also includes a facility for the mother to record her own message.

US Patent 6,692,330 relates to a cot mounted device which plays audio recordings. The device can be activated manually by the parent, or when crying is detected. Storage for a number of different recordings is available. The parent can select which one of the recordings should be selected for use. Additionally, the device offers the facility for the parent to record their own material.

US Patent 6,116,983 describes a cot mounted toy for playing a number of different sounds. Activation and selection of the sound is controlled by the parent via a remote unit.

US Patent 6,022,262 describes an audio playback device for use in a cot. Playback commences when a handle is pulled and ceases when the handle is released. The device stores a number of different sounds and audio recordings. The parent selects manually which of the sounds should be played. The device also includes a facility for the parent to record their own message.

US2004/0123725 describes a playlist management apparatus and method capable of automatically generating and updating a playlist in response to a dynamic change in taste of a user. Hit rates are calculated for respective pieces of audio data based on a ratio of a play time of the piece of audio data until the selection of the skip button to a total play time of the audio data. Pieces of audio data with low hit rates are excluded from the playlist so that tracks not enjoyed by the user are not reproduced.

US2005/0102186 describes a method for facilitating the selection of (for example) an audio track from a database of tracks. Each track is associated with a number of parameters such as the access frequency of the track, the date on which it was last played and a measure of its familiarity to the user. User-defined selection criteria based on these parameters are specified and the tracks meeting that criteria are presented for selection. Each time a track is accessed, its associated parameters are updated.

US2004/0015247 describes a method and system for processing information indicative of a frequency of reproduction of information recorded on mediums, such as music data recorded on CDs. A server system is communicably connected with a plurality of terminals, each terminal being configured to record pieces of information and to reproduce the recorded information. Each terminal obtains reproduction frequency information and transmits it to the server system. The server system performs static processing on the received reproduction information for analysis, so that useful data concerning individual reproduction characteristics of users of the terminals can be provided.

The invention provides a method of assigning a popularity rating to a media recording, the method comprising generating a play instruction in response to movement of a cot-mounted pull-handle or pull-cord operated switch into an ON position; starting playback of the media recording in response to the play instruction; generating a stop instruction in response to movement of the cot-mounted pull-handle or pull-cord operated switch into an OFF position; stopping playback of the media recording in response to the stop instruction; recording a play duration indicative of the time lapse between receipt of the play instruction and receipt of the stop instruction; and assigning a popularity rating to the media recording at least partially in accordance with the play duration.

This enables a popularity rating to be assigned on the basis of crude stop/start instructions generated by a simple ON/OFF switch. This makes it particularly suited to use with a baby. The popularity rating may consist of the raw play duration data, or may be a more sophisticated parameter based for example on a play pattern associated with the media recording. The pull-cord/pull handle operated switch is also particularly suited for use by a baby.

The media recording may contain sound and/or vision, although in the preferred embodiment described below the media recording contains only sound.

The invention may further comprise assigning play histories to two or more media recordings, the play histories recording the order in which the media recordings were last played; assigning probability values to the media recordings at least partially in accordance with their play histories; selecting one of the media recordings, the probability of selection of each recording being determined by its probability value; playing the selected media recording in response to a play instruction received from the pull-handle or pull-cord operated switch mounted to the cot; and assigning a new play history to the selected media recording.

This enables the probability of selection of individual recordings to be adjusted according to their play history. The play histories may be recorded in a number of ways. For instance the play histories may be assigned to the media recordings by maintaining an ordered list of the two or more media recordings, ordered by when the media recording was last played; and the probability values are assigned to the media recordings at least partially in accordance with their position in the list. Alternatively, instead of maintaining an ordered list, the play history may be recorded by associating an index with each media recording (the index being equivalent to the position of the recording in an ordered list).

Preferably, the invention further comprises receiving a control instruction; transmitting a series of control signals in response to the control instruction over an air interface to a media player, wherein the duration between adjacent pairs of control signals increases over the course of the series; and terminating the transmission of the series of control signals in response to a termination condition.

The control instruction may be a play instruction, a stop instruction, or any other instruction intended to control the media player.

In one embodiment, the invention comprises:

a) selecting a media recording from a set of media recordings;

b) playing the selected media recording;

c) adding a new media recording to the set in response to step a) or step b); and

d) repeating steps a)-c).

This prevents a baby from being immediately "bombarded" with a wide variety of recordings, but instead introduces them in a more gradual manner.

Preferably, the invention further comprises receiving a control instruction from a pull-cord or pull-handle operated switch; and transmitting a control signal over an air interface to a media player in response to receipt of the control instruction.

As indicated above, the pull-cord/pull-handle operated switch is particularly suited for use by a baby, and the air interface means that control and/or power cords are not required near the baby, or its cot/crib. The control instruction may be a play instruction, a stop instruction, or any other instruction intended to control the media player.

Preferably, the method further comprises receiving a control instruction from a switch mounted to a cot or crib; and transmitting a control signal over an air interface to a media player in response to receipt of the control instruction.

The cot/crib-mounted switch is particularly suited for use by a baby, and the air interface means that control and/or power cords are not required near the baby, or its cot/crib. The control instruction may be a play instruction, a stop instruction, or any other instruction intended to control the media player.

Any suitable mounting device may be used, typically employing a screw mechanism. Preferably the mechanism comprises a threaded support member sized to fit between a pair of upright bars; and a threaded locking member which can be screwed onto the support member and has a width greater than the distance between the upright bars.

A preferred embodiment of the present invention will now be described with reference to the accompanying drawings, in which:

Figure 1 is a schematic overview of the system;

Figure 1A shows a cross section of the cot unit;

Figure 2 is a schematic view of the cot unit;

Figure 3 shows the switch protocol operation;

Figure 4 is a schematic view of the base unit;

Figure 5 shows the general flow of control by the master controller;

Figure 6 is a state-table denoting the states of the master controller;

Figure 7 is a state machine implementation of the state-table of Figure 6;

Figure 8 is a diagram of the sequence of states of the play engine;

Figure 9 is a transition table denoting the states of the play engine;

Figure 10 is a schematic of the play engine;

Figure 11 shows the control logic of the play engine;

Figures 12 and 13 show a sequence of times measured during a play session;

Figure 14 illustrates the calculation of a popularity measure P1;

Figure 15 illustrates the calculation of a popularity measure P2;

Figure 16 illustrates the calculation of a popularity measure P3; and

Figures 17 and 18 are models of probability distribution.

## Overview

We describe below a system that allows a baby to control the playback of recorded sound material while they are in a cot or crib. The interface is aimed at young babies and is of a very simple nature: when a handle is pulled sound is played, when the handle is released the sound is stopped. Grasping and pulling are reliably accomplished by babies above about four months of age.

The system extracts maximum information from the pull-handle. Based on the pattern of ON-OFF events, a measure of popularity is derived for the sound material that is currently on offer. Over time, the device builds up a database of popularities for the different types of sound material that have been played. The selection process is then biased towards sound material that is matched to the baby's own personal taste. Importantly, the system is non-habituating and adapts its output as the baby's preferences develop over time.

The system is designed to play for up to T_limit minutes of a sound recording during a session lasting up to T_sess hours. The parameter T_limit is chosen to prevent overstimulation of the baby and a typical setting might be 45 minutes. The parameter T_sess is typically chosen to correspond to a night's sleep - for instance 8-12 hours. The same recording is repeated over a block of N sessions, each session typically coinciding with a different night. The parameter N is typically chosen to be 3 or 4, so the baby is played the same recording over a series of 3 or 4 nights. At the end of a block of sessions, a new recording is selected.

The system also provides feedback to interested parents regarding their baby's preferences, and presents an option to send the usage statistics to a central server. The usage statistics allow recommendations for new sound material to be made that are matched to the baby's specific tastes.

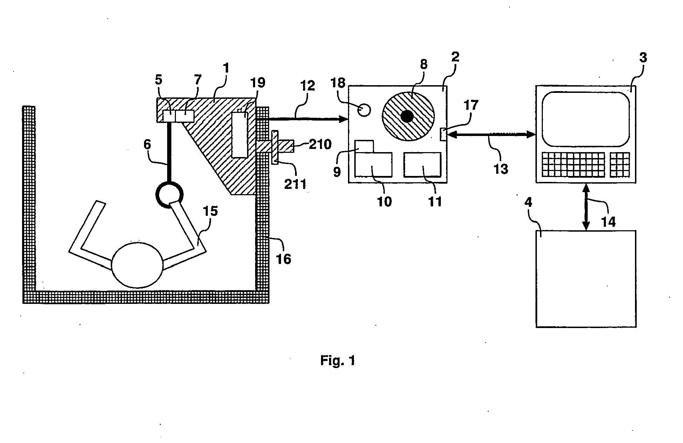

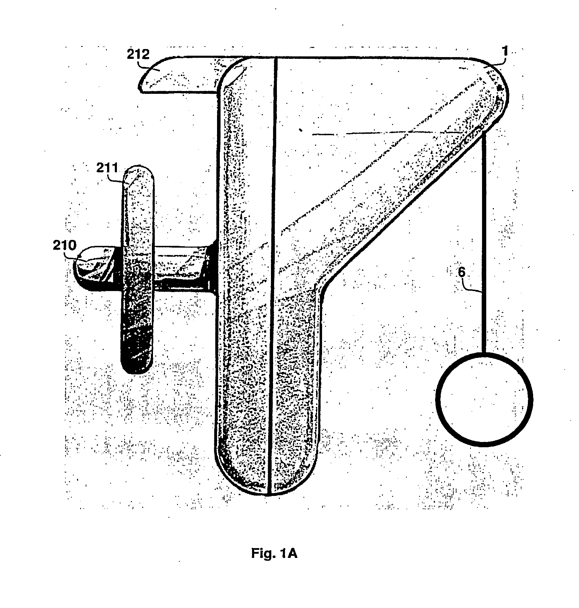

The system comprises two units. With reference to Figure 1, a cot-unit **1** is mounted on the top of a cot **16** and has a pull-handle **6** hanging down. The baby **15** can pull the handle when it is lying on its back thereby activating a switch **5** which will cause a transmitter **7** to transmit a signal to the main unit **2**. The cot-unit **1** is mounted on the cot **16** by means of a simple screw mechanism between the bars and supported by the top bar.

The base-unit **2** is placed in the same room as the cot **16**. It contains a speaker **8**, a receiver **9**, an adaptive sound player **10**, a USB connector **17**, a volume control **18**, and a flash memory card **11**.

Communication **12** between the cot-unit **1** and the base-unit **2** is achieved using a low-power wireless RF link. When the baby pulls the handle **6**, transmitter **7** sends a signal that is picked up by receiver **9** which causes the adaptive sound player **10** to play a prerecorded sound on speaker **8**.

If the parents own a computer **3** (a PC, Macintosh, or other O/S), then the USB-port **17** can be used with USB cable **13** to connect the base-unit **2** to the computer **3**. When connected, the parents can download albums of their choice onto memory card **11**, they can create a recording of their own (for example telling a story), or they can gather information about how the baby used the device. If the parents do not own a computer, the device works autonomously, as it will come preloaded with, say, 30 albums.

If the computer **3** is connected to the internet **14**, the feedback can be transferred to a central server **4**, where they can obtain recommendations for new albums to upload. The two units are entirely separate and disconnected in order to ensure electrical safety, and to simplify design and deployment. The base-unit can be mains powered without compromising safety. The cot-unit can be battery-powered and is designed so that the battery life exceeds the expected life of the product.

**The Cot-unit**

The cot-unit **1** consists of a plastic box, approximately 15 cm wide, 15 cm high and 20 cm deep. It is deep enough that it overhangs in the cot and gives the baby a good grip on the pull handle. It is wide enough that it spans at least two of the bars of the cot, and it is high enough so that it can deal with the baby pulling the cord forcefully and does not get in the way if the baby rolls in the cot. Figure 1A shows a cross section of cot-unit 1. A support member 212 projects from the upper edge of the unit and rests on top of the horizontal bar (not shown) which runs along the upper edge of the cot. The unit is secured by a screw mechanism comprising an externally threaded shaft **210** and a nut **211.** The shaft **210** is sufficiently narrow to pass between two adjacent vertical bars (not shown) of the cot. The nut **211** is screwed onto the shaft **210** and has a width greater than the space between two adjacent vertical bars. Thus by screwing the nut **211** onto the shaft **210,** the nut engages the vertical bars to lock the unit in place.

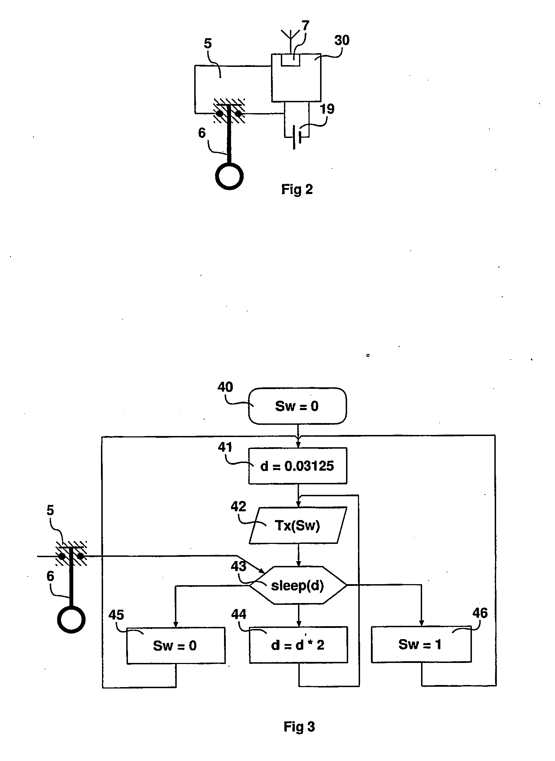

The cot-unit **1** is shown schematically in Figure 2. It consists of a switch **5,** with a pull handle **6,** a battery **19** and a micro-controller **30** with embedded transmitter **7.** The micro-controller **30** is interrupted when the switch **5** changes from on to off or vice versa.

The switch **5** is a push-to-make-release-to-break (PTMRTB) type switch. The switch generates an ON signal in response to the handle **6** being pulled into an ON position, and generates an OFF signal in response to movement of the switch into an OFF position when the handle is released. It has been found that such a simple ON/OFF switch mechanism is particularly suited to operation by babies, in contrast with more complex play/stop/skip controls associated with conventional playback devices.

The signals for ON and OFF must be transferred from the cot-unit 1 to the base-unit **2.** Unlike the users of conventional switches (such as a car-key or a remote control for a television or light), the baby is less able to cope with transmission errors. Hence, the switch operation must be extremely reliable, in order not to send confusing messages to the baby. At the same time, the communication should be low power. We have designed a protocol for the wireless transmission of the ON-OFF signals that requires few components, is extremely reliable, has low latency, and uses very little power.

The protocol operation is shown schematically in Figure 3. It is based on an exponential back-off. The main-loop constitutes the transmission of the switch-state **42** followed by a sleeping period **43** which is doubled every time **44.** The initial sleep-period is 31.25 ms **41,** and the initial state that is transferred is OFF **40.** So initially, the microcontroller will transmit an OFF state immediately and send another OFF state after 31.25 ms. Subsequent OFF packets are sent after 62.5ms, 125ms, 250ms, 500ms, 1s, 2s, 4s, 8s, .... When the baby pulls or releases switch **5** the sleep-operation **43** will be interrupted, and the appropriate path is chosen. If the switch is pulled, **46** will set the state to 1 (ON), the interval timer is set back to 31.25ms **41,** and an ON-packet is transmitted **42,** followed by a sequence of ON-packets. When the switch is released, **45** will set the state to 0 (OFF), and OFF-packets will be transmitted.

The time of the first packet is chosen to be well below human reaction time. If the switch is pulled continuously for a 1 year period, no more than 30 packets will have been transmitted, of which 7 occur in the first two seconds. So, if the receiver misses the first ON-packet, it is very likely to receive another ON-message quickly. In between transmissions, the micro-controller **30** can power down, taking virtually no power when the switch is not changing state for a prolonged period of time, for example when the baby is asleep or during holidays.

We estimated the power consumption of the cot-unit **1** based on the use of an RF-PIC sold by Microchip. The transmission of a packet will take 4.7 mA for 10ms at 3V, or 0.141 mWs. While sleeping, an RF-PIC will take 9 uA at 3V, or 0.027 mW, or 0.8 kWs, 0.25 Wh in a year. Two AA batteries can provide 6 Wh, which leaves 5.75 Wh for transmitting the switch packets. If the switch is pulled every two seconds for a year, it will create 16 million pulls, or 96 million packets, which requires 14.1 kWs, or 4 Wh.

**Base Unit**

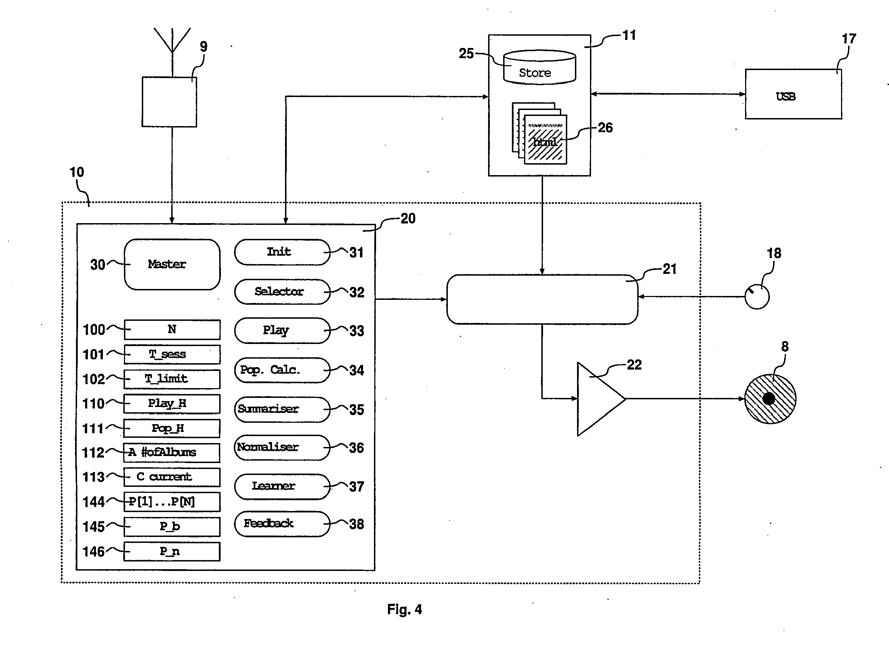

The base-unit is a box, approximately 10 cm high, 8 cm wide, 6 cm deep, much like a PC speaker. A schematic is shown in Figure 4. The unit houses an adaptive sound player **10,** a speaker **8,** a volume control **18,** an RF-receiver **9,** flash memory **11** and a USB port **17.** The adaptive sound player **10** comprises the device controller **20,** an audio decoder **21** and an amplifier **22.**

The flash memory **11** holds the album store **25** which is loaded with a number, A **112,** of albums. An album is a collection of recorded sound, for example an adventure story with musical interludes, a symphony by Bach, Queen, or white noise. Each album lasts for no more than T_limit **102** minutes, and the device will store around 30 albums. The albums are stored using conventional compressed audio formats (e.g. mp3, wma, aac). For playback, a standard audio decoder chip **21** is used to convert the compressed data to an analog audio signal which can be sent, via amplifier **22,** to speaker **8.**

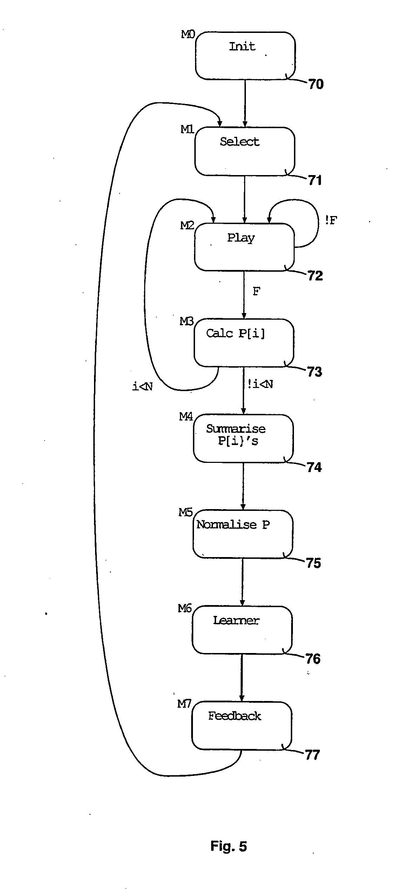

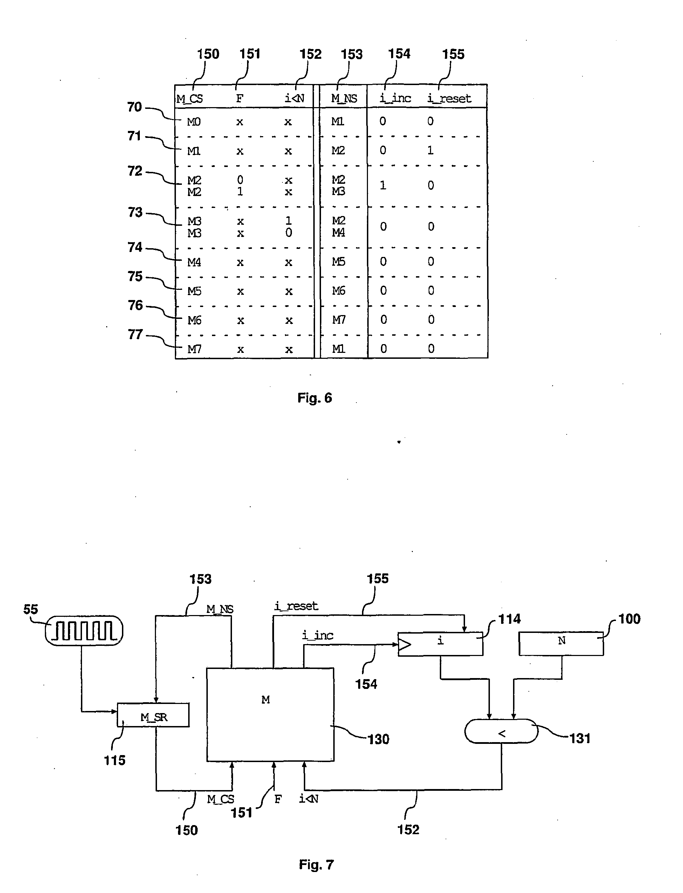

The device controller **20** forms the heart of the base-unit; it connects with the other components, controls the playback of sound material, and generates feedback **26** regarding the baby's preferences. The device controller contains memory units **100-113, 144-146** and process units **30-38.** The operation of the device controller **20** may be described in terms of a finite state machine. The sequence of states is presented in Figure 5, with a state transition table given in Figure 6. A possible implementation of the state machine is shown in Figure 7. This state machine is referred to as the master controller **30.** The master controller **30** ensures proper sequencing and synchronization of the process units **31-37** and generates the required set of controls signals to drive the sound decoder **21.**

The general flow of control is shown in Figure 5. When switched on, the master controller will start in state M0 **70.** During this state, the Initialisation process **31** checks the album store **25** to see if any albums have been added or deleted, updating the play history and popularity distributions accordingly.

In the next state, M1 **71,** the Album Selector **32** selects a random album C **113** based on the Popularity History **111** and the Play History **110** of each album. This album is identified by a number between 0 and the number of albums A **112.** This state also generates a signal, i_reset **155,** which causes the session counter i **114** to be cleared.

Control then passes to state M2 **72** which enables the Play Engine **33** and increments the edge-triggered session counter, i **114,** by setting the i_inc signal **154.** The Play Engine **33** is responsible for monitoring the ON-OFF signals that are received by the RF receiver **9,** and for controlling the playback of the selected album. During the session, a set of times are measured based on the pattern of ON-OFF events that are observed. The system will remain in this state until the Play Engine **33** sets signal F **151,** indicating that the current session has terminated. The set of times measured during the session are made available to the subsequent processes.

With the session over, the machine enters state M3 **73.** Here, the Popularity Calculator **34** derives a popularity measure P[i] **144** for the session i, based on the set of times recorded by the Play Engine **33.** If session counter i **114** is less than the number of sessions per block **100** (a condition indicated by signal i<N **152)** then control is passed back to state M2 **72,** allowing a new session to be started. However, if the session counter has reached the block limit N **100,** then signal i<N **152** causes the state machine to move to state M4 **74.**

In state M4 **74,** the Summariser **35** combines the popularity measures P[1], P[2],...,P[N] **144,** generated during the last N **152** sessions, to give a popularity rating for the block, P_b **145.**

Moving to state M5 **75,** the Normaliser **36** adjusts the popularity rating, P_b **145,** in such a way so as to compensate for the baby's own specific behavior, giving the normalised popularity rating P_n **146.**

In state, M6 **76,** the Learner **37** updates the Popularity History **111** and Play History **110,** incorporating the popularity rating P_n **146** derived from the block of sessions.

In the final state, M7 **77,** feedback regarding the baby's preferences is generated by the Feedback unit **38** and written to the flash memory as a set of HTML pages **26.**

The system then returns to state M1 **71** where a new album is selected and the next block of sessions begins.

Figure 6 denotes the states in a state-table, indicating that given a current state **150** and the inputs F **151** and i<N **152** one calculates the next state **153** and outputs i_inc **154** and i_reset **155.** An 'x' indicates "don't care".

Figure 7 shows a possible state machine implementation, comprising state control logic **M 130** which implements Figure 6, a state register **115** that provides the current state **150** to the control logic **M 130** and that is latched on every clock-cycle with the next state **153.** The control logic outputs signals to reset **155** or increment **154** counter i **114,** which is compared to N **100** using comparator **131.** The resulting signal is used to drive state logic **130** in conjunction with signal F **151.**

**The Play Engine**

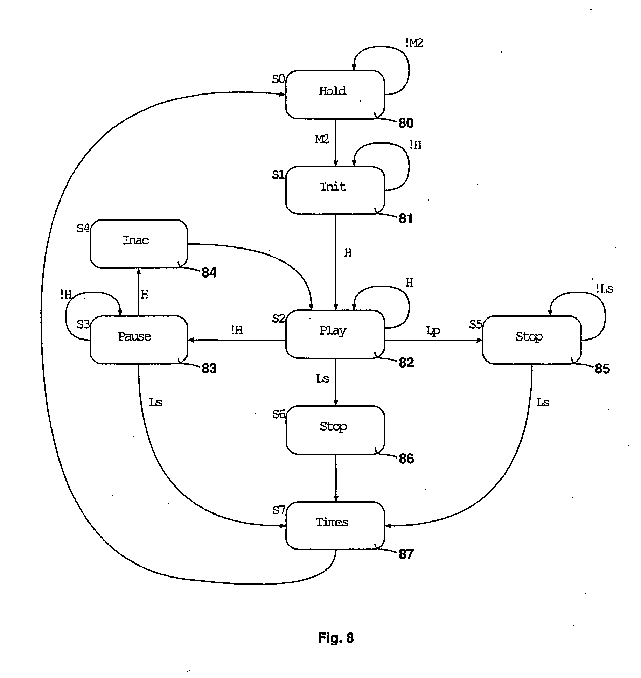

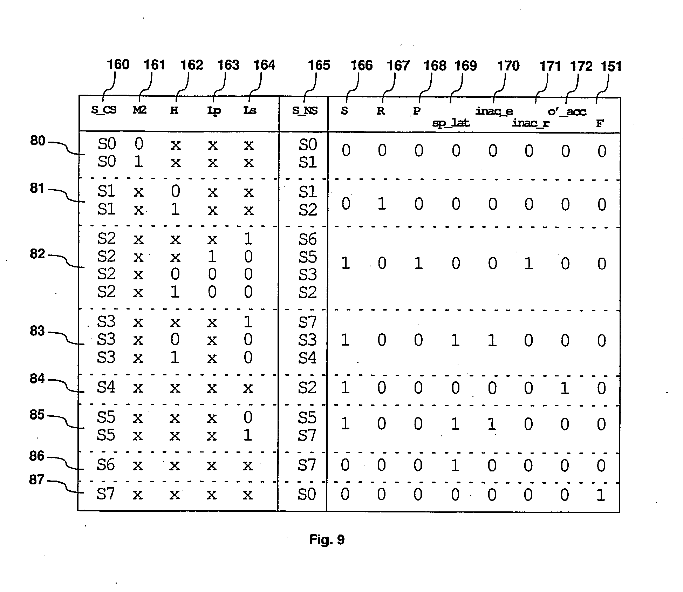

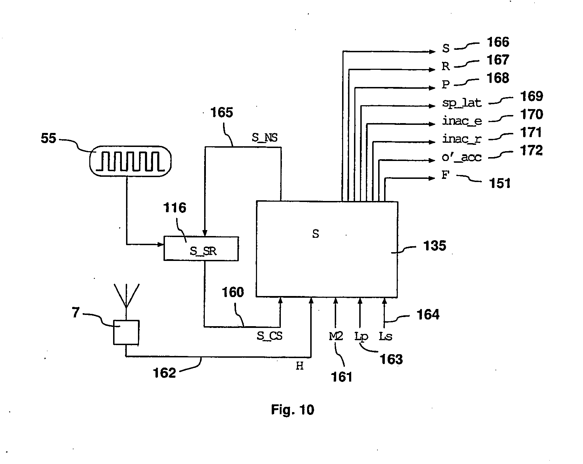

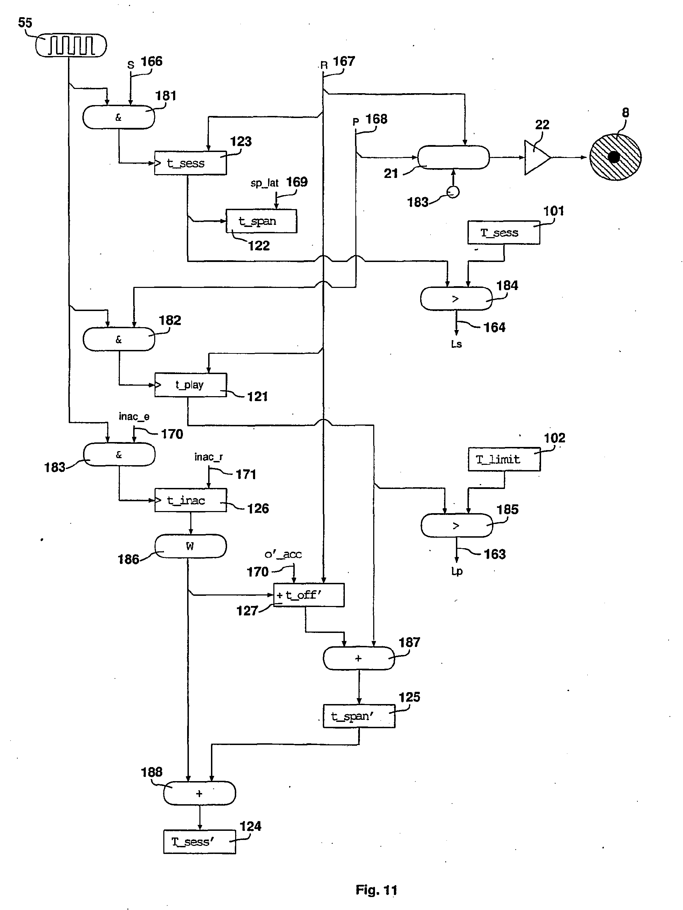

The operation of the Play Engine **33** can be described using a finite state machine as the controller. The sequence of states is presented as a diagram in Figure 8, and as a state transition table in Figure 9. A schematic is given in Figure 10, along with the accompanying control logic in Figure 11. This state machine is referred to as the session controller.

The session controller starts in state S0 **80** and remains in this state until the master controller has entered state M2 **72,** indicating that a new session can be started.

The session controller then moves to state S1 **81** where a reset signal R **167** is generated. The reset signal clears session timer t_sess **123,** play timer t_play **121,** and compensated off-time accumulator t_off' **127.** The reset signal also directs audio decoder **21** to load the album specified by the index of the current album C **113.** The decoder is positioned at the beginning of the album, but playback is not started at this stage.

The controller waits in this state, listening to the output of receiver unit **9.** When handle **6** is pulled, receiver unit **9** will receive an ON-packet and set signal H **162** high. The controller will then move to state S2 **82.** This is the point at which the play session is considered to have started.

In state S2 **82,** signal S **166** is set, indicating that the session is active. This signal remains high until the end of the session has been reached. The session timer t_sess **123** counts the number of clock ticks that have elapsed since the start of the session. To this purpose, clock signal **55** is gated by unit **181** and only passed through if signal S **166** is high. State S2 **82** also sets play signal P **168** and inac_r **171**. Setting play signal P **168** causes the audio decoder **21** to resume playback of the album from the current position. Setting inac_r signal **171** clears the inactivity timer t_inac 126. The play timer t_play **121** counts the number of clocks ticks that elapse while the device is playing audio. This is achieved by gating clock signal **55** with play signal P **168** before being passed on to counter t_play **121.** The system remains in state S2 **82** until either the handle is released, or one of the time limits is reached.

If handle **6** is released, receiver unit **9** will receive an OFF-packet, and output low for signal H **162**. As a result, the controller moves from state S2 **82** to state S3 **83.** The play signal P **168** is pulled low which causes the audio decoder **21** to suspend playback, and prevents the clock ticks from reaching play timer t_play **121**. Signal inac_e **170** is set, allowing timer t_inac **126** to count the number of ticks that elapse during the current period for which playback is suspended. The controller remains in this state until either the handle is pulled again, or the session timer t_sess **123** reaches the session limit T_sess **101.**

If handle **6** is pulled, signal H **162** will go high and the session controller will move to state S4 **84.** Signal inac_e **170** is pulled low, causing gate **183** to prevent the clock signal from reaching timer t_inac **126.** The value of timer t_inac **126** represents the duration of the last period of inactivity (i.e. from when the handle was released to when it was pulled). This value is passed through a time warping function W **186.** With the session controller in state S4 **84,** the signal o'_acc **172** is set, which causes the compensated off-time accumulator t_off' **127** to latch and add the current result of the inactive time warping function W **186.** The value t_off' **127** represents the total off-time after compensating for the periods of inactivity. The controller then returns to state S2 **82** where playback resumes.

Another control path from state S2 **82** occurs if the session timer t_sess **123** reaches the limit specified by the session duration T_sess **101.** To this effect, comparator **184** evaluates the condition t_sess > T_sess. When the limit is reached, signal Ls **164** will go high, causing the controller to move to state S6 **86.**

In state S6 **86,** signal S **166** is pulled low, indicating the session has terminated. Play signal P **168** is also pulled low causing the audio decoder **21** to cease playback. Both timers t_sess **123** and t_play **121** are prevented from receiving clock ticks. Signal sp_lat **169** is set high, causing span timer t_span **122** to latch the current value of session timer t_sess **123.**

The controller then moves to state S7 **87** where the session finished signal F **151** is set high, indicating to the master controller that the session has finished, and the values in the timers, t_play **121,** t_span **122,** t_span' **125** and T_sess' **124,** may be read. Note, the values of the timers remain valid until the next session is ready to start and the session controller has entered state S1 **81**.

The final control path from state S2 **82** occurs if the play timer t_play **121** reaches the play limit specified by T_limit **102.** The comparator **185** monitors the condition t_play<T_limit, setting signal Lp **163** high when the limit has been reached. This will cause the controller to move to state S5 **85.**

In state S5 **85,** play signal P **168** is pulled low which directs the audio decoder **21** to cease playback. Signal sp_lat **169** is set high, causing the span timer t_span **122** to latch the current value of the session timer t_sess **123.** The controller remains in this state until the session timer t_sess **123** reaches the session duration T_sess **101.** Signal Ls **164** will go high, causing the session controller to move to state S7. As before, signal S **166** is pulled low, indicating the session has terminated, and signal F **151** is set high to inform the master controller that the session has terminated.

Similarly, while in state S3 **83,** an exit to state S7 **87** may also occur if the session timer t_sess **123** has reached the session limit T_sess **101** and the signal Ls **164** has gone high.

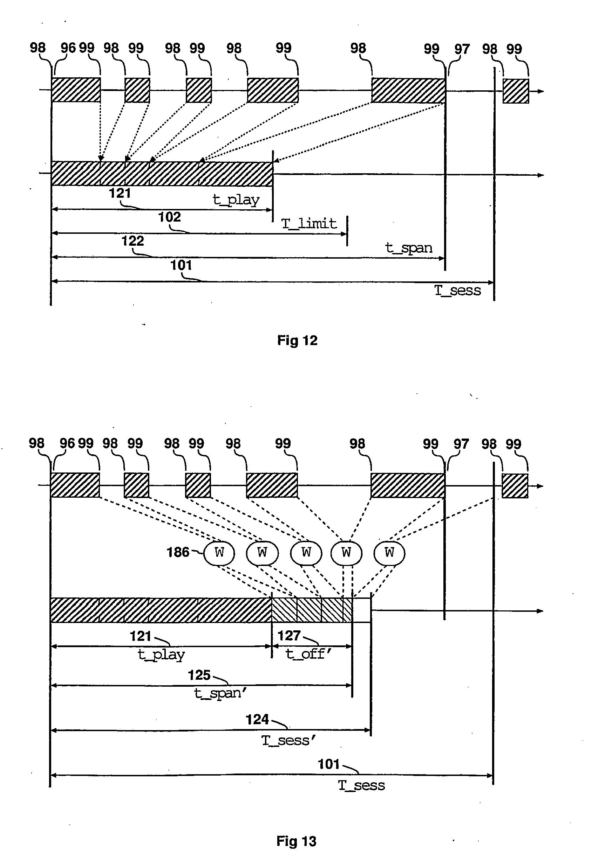

The set of times measured during the play session are shown diagramatically in Figure 12 and Figure 13. Events **98** refer to the baby pulling handle **6,** Events **99** refer to the baby releasing handle **6.** Event **96** is the first pull of the handle in a session. Event **97** is the last release of the handle in the session. t_play **121** is the total period of time for which the handle was pulled. This will never be greater than T_limit **102.** t_span **122** is the time from the first pull to the last release. This will always be less than, or equal to, T_sess **101.**

**Popularity Calculator**

The pull-handle mechanism provides a necessarily simple interface to the baby. Importantly, the way in which it operates allows the immediate association between the action of pulling the handle and the playing of the sound. As a result, the baby is quickly able to learn how to control when the sound is on, and when the sound is off. Other options lack this simplicity, either relying on the potentially confusing concept of state, or requiring multiple controls.

It is important not only that the baby has control over when the sound is played, but also that the baby likes the sound that is being played. One option, which maintains the simplicity of the interface, is for the device to analyse the baby's behavior and to make predictions regarding its preferences. The analysis may look at a variety of measures. However, in its simplest form, we just look at the pattern of ON-OFF events that are generated.

The Popularity Calculator **34** described below interprets the ON-OFF events that are generated by the switch, and derives a popularity measure P[i] **144** for the album played during the session i. We describe three possible structures for this analysis, each subsequent one more advanced.

**Pull duration**

One way to perform the analysis is to measure the total on-duration t_play **121** over a session. This is a measure that correlates well with whether the baby likes the music or not, and is independent of the age of the baby (young babies may tend to pull and release the cord many times in succession). Sound will never be played for longer than a preset time, T_limit **102,** in order to avoid over stimulation (for example 45 minutes). If a baby has listened to all T_limit **102** minutes then they like this particular album. If they have listened to only two minutes then they dislike this album. We define the popularity measure P1 as the division of t_play **121** by T_limit **102:**

$$P1[i] = t\_play \, / \, T\_limit$$

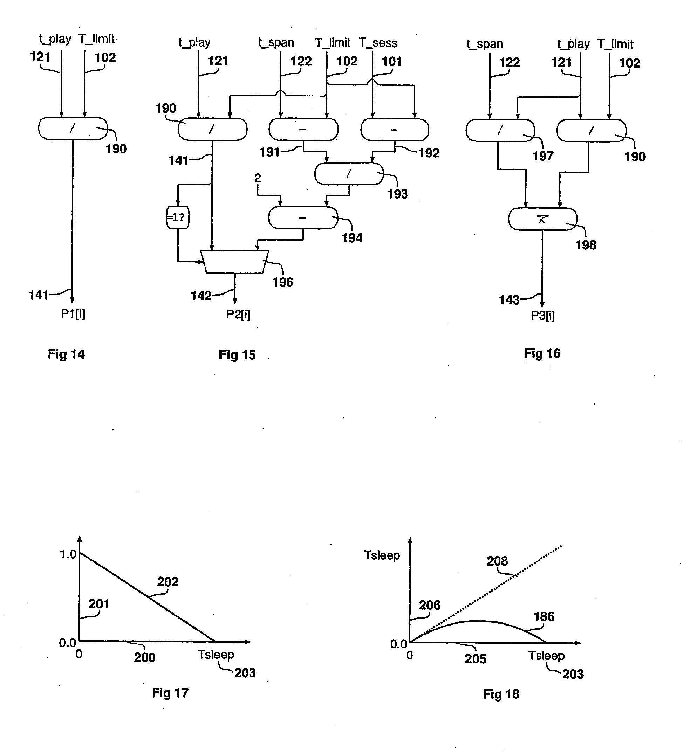

P1 **61** is a number ranging from 0.0 (indicating an unpopular rating) to 1.0 (indicating a popular rating). The time periods, t_play **121** and T_limit **101**, are illustrated in Figure 12, with a possible implementation given in Fig 14.

**Pull duration and time span**

The above method provides a reliable popularity rating when the album is played for less than T_limit **101** minutes. However, if the baby likes music in general, then they might listen to maximum T_limit minutes for several albums. In this situation, the period of time t_span **122** over which T_limit **102** was reached gives a further indication as to the popularity of the album; an album for which T_limit was reached in a short period of time is considered to be more popular than one that required a long period of time. Indeed, even if the limit had not been reached, the period of time over which the album was played provides additional information regarding the popularity of an album. Taking this into account, we define two possible measures, P2 and P3.

P2 is calculated as shown in Figure 15. Assuming T_limit **102** has been reached, the difference **191** between t_span **122** and T_limit **102** is the time that the baby did not listen to the music, while it could have. The difference **192** between the T_sess 101 and T_limit **102** is the maximum time that the baby could have not listened to the music. A division **193** of these two differences gives us a number between 0.0 (very popular, the baby listened to the full album without breaks) to 1.0 (popular, the baby listened to the album with maximum breaks). Given that P1 **141** generates a number between 0.0 (unpopular) and 1.0 (popular), we scale the result by subtracting it from 2. This gives a number between 1.0 (popular) and 2.0 (very popular). Combined with P1, we get:

$$\text{If } (t\_play < T\_limit)$$
$$P2[i] = P1[i]$$
$$\text{Else}$$
$$P2[i] = 2 - (t\_span - T\_limit)/(T\_sess - T\_play)$$

The other measure, P3, is calculated as shown in Figure 16, by first dividing t_span **122** over t_play **121,** and then taking a weighted average with P1:

$$P3[i] = k*P1[i] + (1-k)*(t\_span/t\_play)$$

The weight factor 'k' in the weighted average is a factor, between 0 and 1, that specifies the relative importance of the total time played and the time over which it was played.

**Predicting whether the baby is awake or not**

A more advanced method for measuring popularity is to ignore periods where the baby is asleep. We can predict whether or not the baby is asleep by measuring the contiguous time for which the handle is released. If the handle 6 was released for a short period of time, then the baby was probably awake during that period. If the handle 6 was released for a long period of time (say 6 hours), the baby was either asleep, not in the cot or not interested in listening to sound of any sort at that time; in each case, this period of time should be ignored when considering the popularity of the album. For intermediate periods of inactivity, there is a probability that the baby is awake. We model this probability, and multiply the time that the baby is not listening with this probability. As a result, short periods of inactivity will remain largely unchanged, while long periods of inactivity will effectively be ignored.

The probability distribution that governs the likelihood that a baby is awake can be estimated by monitoring the behavior of a number of babies. A simpler model is shown in Figure 17. The X-axis **200** is the period of time that the handle was not pulled. The Y-axis **201** is the probability of the baby being awake. We assume that the relation **202** between the two reduces linearly over periods of inactivity, up to a limit, T_sleep **203,** at which point sleep is assumed. As mentioned above, the duration of each period of inactivity, t_inac **126,** is multiplied by the probability that the baby is asleep during that period of time, giving the effective period of inactivity t_inac':

$$t\_inac' = W(t\_inac) = (T\_sleep - t\_inac) * t\_inac/T\_sleep$$

This mapping is shown in Figure 18. The X-axis **205** is the measured period of inactivity t_inac **126** and the Y-axis **206** is the time-compensated period of inactivity t_inac'. Without compensation, there would be a direct mapping **208,** but with compensation we get a mapping **186** which reduces the influence of longer periods of inactivity.

The time-compensation mappingW **186** is applied to each period of inactivity observed during the session. Taking this into account, we get alternative forms for t_span and T_sess:

$$t\_span' = t\_play + t\_off'$$

$$T\_sess' = t\_play + t\_off' + W(t\_inac)$$

where t_off' **127** represents the sum of time-compensated periods of inactivity observed during the period t_span **122,** and t_inac **126** represents the period of inactivity after t_span. These time measures are shown diagramatically in Figure 13. Note, t_inac will be zero if the session terminated while the album was being played. t_play is only effected by the "ON" periods and therefore remains unchanged.

The times t_span' and T_sess' are generated by the play engine during the course of the session. The algorithms for calculating the popularity measures P2 and P3, can be applied as before, using T_sess' and t_span' in place of T_sess and t_span respectively. Note, P1 does take into account periods of inactivity and remains unchanged.

Summarising popularity over a block of sessions

The popularity measures, P[1], P[2], ... , P[N] **144,** are recorded over a number of sessions, N **100.** The Summariser **35** combines this data and derives a single measure that reflects the popularity of the current album over the previous block. One way to achieve this is to take the maximum of all the popularity measures, since this approach ignores unpopular outliers (which can, for example, be due to the baby not feeling well):

$$P\_b = \max(P[1], P[2], \dots, P[N])$$

More complex measures would assign a confidence value to each session's popularity, and then calculate a weighted average based on the confidence values. The number of sessions, N **100,** in a block should be chosen with care. If N is too low, no reliable statistics can be obtained as to whether a baby likes an album or not, and the baby will not learn to appreciate more complex albums. On the other hand, if N is too large, the device will not be able to respond quickly enough to the baby's preferences, resulting in the baby becoming habituated.

**Normalising the popularity data**

The popularity rating, P_b **145,** generated by the Summariser **35** is a unit-less number and has an unknown average. Indeed, each baby will exhibit a different behavior and have a different average popularity rating and standard deviation. The Normaliser **36** adjusts the popularity rating P_b **145** to give a normalised popularity P_n **146** which lies on a uniform scale and is invariant to the baby's own specific behavior.

The average popularity and the standard deviation around this average are estimated using a decaying average. The decaying factor starts off as 1, and is reduced over time to a weighing factor that is in line with how quickly children change their behaviour. We denote the number of blocks over which the average should be taken B.

The process may be described as follows:

Initial Settings:

BiasCounter = 1
Bias = 0
StdDev = 0

After each block of N sessions:

$$E = 1 / \text{Biascounter}$$

$$\text{Bias} = \text{Bias} * (1\text{-}E) + P\_b * E$$

$$s = (P\_b - \text{Bias})\hat{\ }2$$

$$\text{If (BiasCounter} == 1) \text{ then}$$

$$\text{StdDev} = 1$$

$$\text{Else}$$

$$\text{StdDev} = \text{StdDev} * (1\text{-}E) + s * E$$

$$\text{Endif}$$

$$\text{If (BiasCounter} < B) \text{ then}$$

$$\text{BiasCounter} = \text{BiasCounter} + 1$$

$$\text{Endif}$$

$$P\_n = (P\_b - \text{Bias})/\text{StdDev}$$

The value for B should be chosen with care. If B is too high the system is too slow to adapt to changing tastes of the baby. If B is too low, the system adapts to noise in the measurements rather than the baby's preference.

**The Learner**

The device employs an adaptive selection algorithm in order to determine which album should be played next. The process is governed by two sets of statistics, both of which are distributed over the collection of available albums. The first set reflects the baby's personal preferences and can be interpreted as assigning a popularity rating for each of the albums. The second set relates to the play history for each album and indicates when the album was last played.

A weighted combination of the two sets of statistics is used to determine which album should be selected next. The baby's preferences bias the selection process towards popular albums while the play history favours those albums that haven't been played recently. Below we describe each set of statistics in turn, and the way in which they are updated by the Learner **37.**

**Play history**

The play history, Play_H **110,** is maintained as a sorted list of albums, ordered by when the album was last played, with the most recently played album at the head of the list.

The list will have A elements. Each element of the list is assigned a value log(I), where I is the index of the element in the list, starting with index 1. Hence, the last element in the list will have a value of log(A). We then normalise these values to probabilities, by scaling them by the sum of all values. The number of the album that was played during the previous block of N sessions is given by C **113.** The play history probability density function is denoted Play_H[] **110** and an element Play_H[x] stores the probability that x is going to be played next.

The Learner **37** updates the play history **110** as follows:

Initially:

List is a list of indices of all albums

After each block of N sessions:

Remove C from List

Insert C at place 1 in List

Sum = 0

For each index I (1 … A)

$$V[I] = \log(I)$$

$$Sum = Sum + V[I]$$

For each index I (1 … A) in list

$$Play\_H[List[I]] = V[I]/Sum$$

**Popularity History**

The popularity history, Pop_H **111,** is stored as a Probability Density Function (PDF). Each album has a probability assigned to it, reflecting the likelihood that the baby likes this album.

When the device is used for the first time, no prior knowledge regarding the baby's preferences is available. The PDF is simply initialised with a uniform distribution, with the result that each album will have the same chance of being selected. (Alternatively, the device can be initialised using averaged statistics derived from the data of other babies of a similar age.) During operation of the device, the PDF is adjusted in response to the baby's actions. An album's rating will increase if found to be popular and decrease if found to be unpopular.

The learner **37** tries to maintain a proper estimate for the PDF that reflects the baby's preferences. We achieve this by folding in the popularity rating P_n **146,** derived by the Normaliser **36,** into our PDF. This is a two step process. First, the measured popularity, P_n, is mapped onto a probability value into the PDF. Second, this value is then used to adapt the PDF. This process is explained in detail below

1. Mapping the measured popularity index onto a probability is performed by assuming that the popularity will roughly follow a normal distribution. (Strictly speaking it cannot be a normal distribution, since our timing measurements are limited.) We map a P_n value of 0 onto a probability of 1/A (where A is the number of albums, **112**), we map a P_n value of -3 or below onto a probability value of 0, and a P_n value of 3 or above onto a probability value of 1. In terms of a normal distribution: -3 reflects the 0.5-percentile, and +3 reflects the 99.5- percentile.

The mapping can be done by using a linear interpolation, or one can follow the CDF (cumulative distribution function) of a normal distribution. In the example implementation below we use a linear interpolation. The PDF associated with a baby's preference is called Pop_H **111**, and element Pop_H[x] denotes the relative preference of the baby for album x.

2. Folding the obtained probability into the PDF involves trying to make our PDF more consistent with the reading that we have obtained. Hence we will use a weighting factor, 'j', that will tell us how quickly to adapt our PDF to a reading. We establish how much bigger or smaller the probability value of the album will become, and this difference is then taken away from the probabilities of all other albums proportionally to their probability.

The weight factor 'j', which is a value between 0 and 1, should be chosen with care. Too high a weight factor will cause the system to forget old albums, too low a weight factor will cause the system to adapt too slowly.

Noise can be added to the system, or a minimum PDF for each album can be set, in order to prevent albums from being 'banned' by having a PDF value that is so close to zero that they are never picked again. This bottom value should be proportional to 1/A, for example 1/(2A).

In pseudo-code:

For each block of N sessions:

```
If (P_n < -3) then
        mapP = 0
Elseif (P_n < 0) then
        mapP = (P_n+3)/(3*A)
Elseif (P_n < 3) then
        mapP = P_n * (1-1/A)/3 + 1/A
Else
        mapP = 1
Endif
Diff = Pop_H[C] * j + mapP *(1-j) - Pop_H[C]
For each album I (1 ... A)
        Pop_H[I] = Pop_H[I] * (1 - Diff)
Endfor
Pop_H[C] = Pop_H[C] + Diff
```

**Album Selection**

The Album Selector **32** is governed by the two distributions, the play history Play_H **110** and the popularity history Pop_H **111.** We first multiply the two probability functions Play_H and Pop_H. Albums that proved popular in the past and that have not been played recently end up with a higher chance of selection. Conversely, a reduced chance of selection results for un-popular albums that were played recently. This selection process also guarantees that all albums in the collection have at least some chance of being played. This is important to ensure that the system is non-habituating and that it can adapt as the baby's preferences evolve over time. Another point to note, is that the same album will never be selected in two consecutive session, since the play history for the album will assign a zero probability to the album after the first session.

We first compute the overall likelihood R of an album being played next. We then compute the sum, Sum, of all the R values. We then pick a random number between 0 and Sum, and we start subtracting the overall R of each album in turn until we reach a negative number. The previous album is the randomly selected album.

At the start of each block ofN sessions:

```
For each album I (1, 2, ... , A)
        R[I] = Pop_H[I] * Play_H[I]
endFor


Sum = R[1] + R[2] + ... + R[A]
Random = random number between 0 and Sum


For each album I (1, 2, ... , A)
        If (Random < R[I]) then
                C = I; Select I to be played over this period.
                Done
        Endif
        Random = Random - R[I]
endFor
```

The selection process represents an important aspect of the overall operation of the device. The selection achieves the following criteria: the device must present albums in a non-habituating manner; the selection of albums should be in keeping with the baby's preferences; and the system should adapt as the baby's preferences evolve over time.

**Album Check**

The album store **25** consists of two parts: the 'vault' and the 'jukebox'. The vault stores albums that are at present hidden from the baby. The jukebox contains the albums that are being played. After each block of N sessions, an extra album gets moved from the vault to the jukebox. Initially, the vault contains all albums, and the jukebox just a single album, white noise. The repertoire of albums is gently introduced to the baby. The order in which they are being introduced can be pre-specified.

When a new album is added to the jukebox, it has to be placed in the PDF for both the play history and the baby's preference: H and L. In the play history we place the album at the tail of the list, since this album has never been played. In the baby's preference, we assign this album an 'average' preference value of $1/(A+1)$, where A is the number of albums before we inserted this new album. All other albums have their preference reduced. This process is implemented by the Initialiser **31:**

When a new album gets added:

```
newValue = 1/(A+1)
For each album I (1 ... A)
        L[I] = L[I] * (1 - Diff)
Endfor
L[A+1] = newValue
A = A + 1
```

**USB Connectivity**

The base-unit **2** may be connected to a computer **3** that includes a USB port. The concept of a removable storage device is used to allow the device to be plugged into any computer without the need to install any "drivers". This makes the device compatible with any computer system, whether it runs Windows-XP, 2000, ME, MacOS or Linux. Once plugged in, the parents can get access to the feedback information, and upload additional sound material.

**Parental Feedback**

Feedback regarding the baby's preferences and usage statics is maintained as a set of HTML pages **25,** located on the flash memory **11.** After the learner **37** has updated the play history **110** and the popularity history, the feedback process **38** updates the feedback pages to incorporate the information from the last block of sessions.
The HTML pages **25** become accessible when the device is plugged into a computer and can be viewed using any standard web-browser. The HTML pages also present the option for parents to press a button and send their baby's preference data to a central server **4**. This option assumes that the computer has an active internet connection **14.**
The feedback made available to the parents includes the following types of information:

- **Album Preferences** - The popularity ratings for each album in the store.
- **Activity History** - When and for how long the device was used during previous sessions.
- **Popularity History** - The popularity rating of each album over the sessions.
- **Recommender Service** - An option to receive recommendations of new sound material.

**The Recommender Service**

If people have an internet connection **14,** then they are given the opportunity to upload their statistics to central server **4**. This server runs recommendation software (similar to that of amazon.com), which recommends albums to the parents. There are two types of recommendation: the first is based on other babies of a similar age with similar preferences, and the second is based on older babies that had similar preferences when they were at a similar age.
We plan to use a standard recommender algorithm as published in the literature.
The preferred embodiment described above offers a number of distinct advantages. Most importantly, the system offers an interface that allows young babies to control the playback of sound material. The system learns the personal preferences of the baby and employs an adaptive algorithm to select the most appropriate piece of sound material. Furthermore, the system provides feedback to interested parents regarding their baby's personal preferences. Recording the baby's usage statistics also allows a recommendation service to be offered. Finally, the two-unit design offers a low power solution, ensures electrical safety and simplifies deployment of the device. However, in a more basic version the cot-unit and base-unit may be integrated into a single cot-mounted device.

**Claims**

1. A method of assigning a popularity rating to a media recording, the method comprising generating a play instruction in response to movement of a cot-mounted pull-handle or pull-cord operated switch (5, 6) into an ON position; starting playback of the media recording in response to the play instruction; generating a stop instruction in response to movement of the cot-mounted pull-handle or pull-cord operated switch into an OFF position; stopping playback of the media recording in response to the stop instruction; recording a play duration indicative of the time lapse between receipt of the play instruction and receipt of the stop instruction; and assigning a popularity rating to the media recording at least partially in accordance with the play duration.

2. A method according to claim 1 further comprising selecting the media recording from a database (25) of media recordings at least partially in accordance with a popularity rating previously assigned to the media recording.

3. A method according to claim 2 further comprising assigning a play history (110) to the recording; and selecting the media recording from a database of media recordings at least partially in accordance with a play history of the media recording.

4. A method according to claim 3 further comprising maintaining an ordered list of the media recordings in the database, ordered by when the media recording was last played; and selecting the media recording at least partially in accordance with its position in the list.

**5.** A method according to any of the preceding claims further comprising monitoring the time elapsed since receipt of the play instruction; and automatically generating the stop instruction in response to the monitored time exceeding a predetermined threshold.

**6.** A method according to any of the preceding claims further comprising assigning play histories (110) to two or more media recordings, the play histories recording the order in which the media recordings were last played; assigning probability values to the media recordings at least partially in accordance with their play histories; selecting one of the media recordings, the probability of selection of each recording being determined by its probability value; playing the selected media recording in response to a play instruction received from the pull-handle or pull-cord operated switch mounted to the cot; and assigning a new play history (110) to the selected media recording.

**7.** A method according to claim 6 wherein the play histories (110) are assigned to the media recordings by maintaining an ordered list of the two or more media recordings, ordered by when the media recording was last played; and wherein the probability values are assigned to the media recordings at least partially in accordance with their position in the list.

**8.** A method according to any of claims 6 to 7 further comprising assigning a probability value to the selected media recording at least partially in accordance with its assigned popularity rating.

**9.** A method according to any of the preceding claims wherein the switch is a pull-cord operated switch.

**10.** Apparatus configured to perform a method according to any preceding claim.

**Patentansprüche**

**1.** Verfahren zum Zuweisen eines Beliebtheitsgrades zu einer Medienaufzeichnung, wobei das Verfahren die Schritte aufweist:

Erzeugen einer Wiedergabeanweisung in Antwort auf eine Bewegung eines an einem Kinderbett montierten, durch einen Ziehgriff oder eine Ziehschnur betätigten Schalters (5, 6) in eine EIN-Stellung;
Starten der Wiedergabe der Medienaufzeichnung in Antwort auf die Wiedergabeanweisung;
Erzeugen einer Stoppanweisung in Antwort auf eine Bewegung des am Kinderbett montierten, durch einen Ziehgriff oder eine Ziehschnur betätigten Schalters in eine AUS-Stellung;
Unterbrechen der Wiedergabe der Medienaufzeichnung in Antwort auf die Stoppanweisung;
Speichern einer Wiedergabedauer, die die zwischen dem Empfang der Wiedergabeanweisung und dem Empfang der Stoppanweisung verstrichene Zeit anzeigt; und
Zuweisen eines Beliebtheitsgrades zur Medienaufzeichnung mindestens teilweise gemäß der Wiedergabedauer.

**2.** Verfahren nach Anspruch 1, ferner mit dem Schritt Auswählen der Medienaufzeichnung von einer Datenbank (25) von Medienaufzeichnungen mindestens teilweise gemäß einem Beliebtheitsgrad, der der Medienaufzeichnung im Voraus zugewiesen worden ist.

**3.** Verfahren nach Anspruch 2, ferner mit den Schritten Zuweisen einer Wiedergabehistorie (110) zur Medienaufzeichnung und
Auswählen der Medienaufzeichnung von einer Datenbank von Medienaufzeichnungen mindestens teilweise gemäß einer Wiedergabehistorie der Medienaufzeichnung.

**4.** Verfahren nach Anspruch 3, ferner mit den Schritten
Pflegen einer geordneten Liste der Medienaufzeichnungen in der Datenbank, die danach geordnet ist, wann die Medienaufzeichnung zuletzt wiedergegeben wurde, und
Auswählen der Medienaufzeichnung mindestens teilweise gemäß ihrer Position in der Liste.

**5.** Verfahren nach einem der vorangehenden Ansprüche, ferner mit den Schritten
Überwachen der seit dem Empfang der Wiedergabeanweisung verstrichenen Zeit, und
automatisches Erzeugen der Stoppanweisung, wenn die überwachte Zeit einen vorgegebenen Schwellenwert überschreitet.

**6.** Verfahren nach einem der vorangehenden Ansprüche, ferner mit den Schritten
Zuweisen von Wiedergabehistorien (110) zu zwei oder mehr Medienaufzeichnungen, wobei die Wiedergabehistorien die Folge speichern, in der die Medienaufzeichnungen zuletzt wiedergegeben worden sind,
Zuweisen von Wahrscheinlichkeitswerten zu den Medienaufzeichnungen mindestens teilweise gemäß ihrer Wiedergabehistorien,
Auswählen einer der Medienaufzeichnungen, wobei die Auswahlwahrscheinlichkeit jeder Medienaufzeichnung durch ihren Wahrscheinlichkeitswert bestimmt ist,
Wiedergeben der ausgewählten Medienaufzeichnung in Antwort auf eine Wiedergabeanweisung, die vom am Kinderbett montierten, durch einen Ziehgriff oder eine Ziehschnur betätigten Schalter empfangen wird, und
Zuweisen einer neuen Wiedergabehistorie (110) zur ausgewählten Medienaufzeichnung.

**7.** Verfahren nach Anspruch 6, wobei die Wiedergabehistorien (110) den Medienaufzeichnungen zugewiesen werden durch Pflegen einer geordneten Liste der zwei oder mehr Medienaufzeichnungen, die danach geordnet ist, wann die Medienaufzeichnung zuletzt wiedergegeben wurde, und wobei die Wahrscheinlichkeitswerte den Medienaufzeichnungen mindestens teilweise gemäß ihrer Position in der Liste zugewiesen werden.

**8.** Verfahren nach Anspruch 6 oder 7, ferner mit dem Schritt
Zuweisen eines Wahrscheinlichkeitswertes zur ausgewählten Medienaufzeichnung mindestens teilweise gemäß ihrem zugewiesenen Beliebtheitsgrad.

**9.** Verfahren nach einem der vorangehenden Ansprüche, wobei der Schalter ein durch eine Ziehschnur betätigter Schalter ist.

**10.** Vorrichtung, die dafür konfiguriert ist, ein Verfahren nach einem der vorangehenden Ansprüche auszuführen.

## Revendications

**1.** Procédé d'attribution d'une cote de popularité à un enregistrement média, le procédé comprenant la production d'une instruction de lecture en réponse à un mouvement d'un commutateur (5, 6), monté dans un berceau, mis en oeuvre par cordon de tirage ou par poignée de tirage, dans une position MARCHE ; le démarrage de la lecture de l'enregistrement média en réponse à l'instruction de lecture ; la production d'une instruction d'arrêt en réponse au mouvement du commutateur, monté dans un berceau, mis en oeuvre par cordon de tirage ou par poignée de tirage, dans une position ARRÊT ; l'arrêt de la lecture de l'enregistrement média en réponse à l'instruction d'arrêt ; l'enregistrement d'une durée de lecture indicative du temps écoulé entre la réception de l'instruction de lecture et la réception de l'instruction d'arrêt ; et l'attribution d'une cote de popularité à l'enregistrement média au moins partiellement selon la durée de lecture.

**2.** Procédé selon la revendication 1, comprenant en outre la sélection de l'enregistrement média à partir d'une base de données (25) d'enregistrements médias au moins partiellement selon une cote de popularité précédemment attribuée à l'enregistrement média.

**3.** Procédé selon la revendication 2, comprenant en outre l'attribution d'un historique de lecture (110) à l'enregistrement ; et la sélection de l'enregistrement média à partir d'une base de données d'enregistrements médias au moins partiellement selon un historique de lecture de l'enregistrement média.

**4.** Procédé selon la revendication 3, comprenant en outre le maintien d'une liste ordonnée des enregistrements médias dans la base de données, ordonnée par ordre du dernier enregistrement média lu ; et la sélection de l'enregistrement média au moins partiellement selon sa position dans la liste.

**5.** Procédé selon l'une quelconque des revendications précédentes, comprenant en outre le contrôle du temps écoulé depuis la réception de l'instruction de lecture ; et la production automatique de l'instruction d'arrêt en réponse au temps contrôlé dépassant un seuil prédéterminé.

**6.** Procédé selon l'une quelconque des revendications précédentes, comprenant en outre l'attribution d'historiques de lecture (110) à deux ou plusieurs enregistrements médias, les historiques de lecture enregistrant l'ordre dans lequel les enregistrements médias ont été lus en dernier ; l'attribution de valeurs de probabilité aux enregistrements médias au moins partiellement selon leurs historiques de lecture ; la sélection d'un des enregistrements médias, la probabilité de sélection de chaque enregistrement étant déterminée par sa valeur de probabilité ; la lecture de l'enregistrement média sélectionné en réponse à une instruction de lecture reçue en provenance du commutateur mis en oeuvre par cordon de tirage ou par poignée de tirage, monté dans un berceau ; et l'attribution d'un nouvel historique de lecture (110) à l'enregistrement média sélectionné.

7. Procédé selon la revendication 6, dans lequel les historiques de lecture (110) sont attribués aux enregistrements médias en maintenant une liste ordonnée des deux ou plusieurs enregistrements médias, ordonnée par ordre de lecture du dernier enregistrement média ; et dans lequel les valeurs de probabilité sont attribuées aux enregistrements médias au moins partiellement selon leur position dans la liste.

8. Procédé selon l'une quelconque des revendications 6 à 7, comprenant en outre l'attribution d'une valeur de probabilité à l'enregistrement média sélectionné au moins partiellement selon sa cote de popularité attribuée.

9. Procédé selon l'une quelconque des revendications précédentes, dans lequel le commutateur est un commutateur mis en oeuvre par cordon de tirage.

10. Appareil configuré pour effectuer un procédé selon l'une quelconque des revendications précédentes.

Fig. 1

Fig. 1A

Fig 2

Fig 3

20

Fig. 4

M0 Init
70

M1 Select
71

M2 Play !F
72

F

M3 Calc P[i]
73

i<N !i<N

M4 Summarise P[i]'s
74

M5 Normalise P
75

M6 Learner
76

M7 Feedback
77

**Fig. 5**

| M_CS | F | i<N | M_NS | i_inc | i_reset |
|------|---|-----|------|-------|---------|
| M0 | x | x | M1 | 0 | 0 |
| M1 | x | x | M2 | 0 | 1 |
| M2 | 0 | x | M2 | 1 | 0 |
| M2 | 1 | x | M3 | 1 | 0 |
| M3 | x | 1 | M2 | 0 | 0 |
| M3 | x | 0 | M4 | 0 | 0 |
| M4 | x | x | M5 | 0 | 0 |
| M5 | x | x | M6 | 0 | 0 |
| M6 | x | x | M7 | 0 | 0 |
| M7 | x | x | M1 | 0 | 0 |

**Fig. 6**

**Fig. 7**

EP 1 911 027 B1

Fig. 8

24

| S_CS | M2 | H | Ip | Ls | S_NS | S | R | P | sp_lat | inac_e | inac_r | o'_acc | F |
|---|---|---|---|---|---|---|---|---|---|---|---|---|---|
| S0 | 0 | x | x | x | S0 | 0 | 0 | 0 | 0 | 0 | 0 | 0 | 0 |
| S0 | 1 | x | x | x | S1 | | | | | | | | |
| S1 | x | 0 | x | x | S1 | 0 | 1 | 0 | 0 | 0 | 0 | 0 | 0 |
| S1 | x | 1 | x | x | S2 | | | | | | | | |
| S2 | x | x | x | 1 | S6 | 1 | 0 | 1 | 0 | 0 | 1 | 0 | 0 |
| S2 | x | x | 1 | 0 | S5 | | | | | | | | |
| S2 | x | 0 | 0 | 0 | S3 | | | | | | | | |
| S2 | x | 1 | 0 | 0 | S2 | | | | | | | | |
| S3 | x | x | x | 1 | S7 | 1 | 0 | 0 | 1 | 1 | 0 | 0 | 0 |
| S3 | x | 0 | x | 0 | S3 | | | | | | | | |
| S3 | x | 1 | x | 0 | S4 | | | | | | | | |
| S4 | x | x | x | x | S2 | 1 | 0 | 0 | 0 | 0 | 0 | 1 | 0 |
| S5 | x | x | x | 0 | S5 | 1 | 0 | 0 | 1 | 1 | 0 | 0 | 0 |
| S5 | x | x | x | 1 | S7 | | | | | | | | |
| S6 | x | x | x | x | S7 | 0 | 0 | 0 | 1 | 0 | 0 | 0 | 0 |
| S7 | x | x | x | x | S0 | 0 | 0 | 0 | 0 | 0 | 0 | 0 | 1 |

Fig. 9

S ⟋ 166
R ⟋ 167
P ⟋ 168
sp_lat ⟋ 169
inac_e ⟋ 170
inac_r ⟋ 171
o'_acc ⟋ 172
F ⟋ 151

55

165

S_NS

116

S_SR

S

135

160

7

S_CS

162

H

M2    Lp    Ls

164

161    163

**Fig. 10**

Fig. 11

Fig 12

Fig 13

t_play   T_limit

121        102

190

141

P1[i]

**Fig 14**

t_play        t_span   T_limit  T_sess

121          122      102      101

190

141

=1?

2

191

192

193

194

142        196

P2[i]

**Fig 15**

t_span        t_play   T_limit

122          121      102

197        190

κ

198

143

P3[i]

**Fig 16**

1.0

0.0

0      200       Tsleep

201      202

203

**Fig 17**

Tsleep

0.0

0      205       Tsleep

206      208

186

203

**Fig 18**

**EP 1 911 027 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6160986 A
- US 4819616 A
- US 5774861 A
- US 6692330 B
- US 6116983 A
- US 6022262 A
- US 20040123725 A
- US 20050102186 A
- US 20040015247 A